# EUROPÄISCHE PATENTANMELDUNG

(11) **EP 4 660 729 A1**
(43) Veröffentlichungstag der Anmeldung: **10.12.2025**
(21) Anmeldenummer: 24180555.5
(22) Anmeldetag: 06.06.2024
(51) Int. Cl.: G05B 19/418

(54) **COMPUTERGESTÜTZTE TAKTZEIT- UND/ODER VERFÜGBARKEITSANALYSE VON REZEPTGESTEUERTEN PROZESSEN IN CHEMISCHEN PRODUKTIONSANLAGEN**

(71) Anmelder: Saltigo GmbH, 51369 Leverkusen (DE)
(72) Erfinder: Stiller, Julian, 40589 Düsseldorf (DE); Siekmann, Tobias, 50739 Köln (DE)
(74) Vertreter: Matzke, Michael

(57) **Zusammenfassung**

Offenbart ist ein computer-implementiertes Verfahren zur Taktzeit- und/oder Verfügbarkeitsanalyse eines rezeptgesteuerten Prozesses in einer chemischen Produktionsanlage sowie eine zugehörige Datenverarbeitungsvorrichtung und ein Computerprogramm.

## Beschreibung

### TECHNISCHES GEBIET

Die vorliegende Erfindung betrifft im Allgemeinen das Feld der chemischen Produktion und im speziellen ein Verfahren zur Taktzeit- und/oder Verfügbarkeitsanalyse eines rezeptgesteuerten Prozesses in einer chemischen Produktionsanlage.

### HINTERGRUND

In der produzierenden Industrie (z.B. der chemischen Industrie) werden zahlreiche Produkte nach Batchverfahren produziert. In der Regel sind dafür mehrere technische Apparate zu einem Prozess zusammengefasst. Oft wird in diesem Prozess dann über mehrere Monate bis hin zu mehreren Jahren nur ein einziges Produkt in einer Vielzahl von Partien produziert. Eine Partie durchläuft diesen Prozess in einer definierten Reihenfolge. Die Wertschöpfung des gesamten Prozesses wird gesteigert, wenn mehr Partien pro Zeit unter sonst gleichen Bedingungen (Partiegröße, Ausbeute, Qualität) produziert werden. Hierfür muss der Prozess (z.B. hinsichtlich der mittleren Taktzeit und der Taktzeitschwankung) mittels technischer Maßnahmen optimiert werden. Gleichzeitig führt eine Reduktion der Taktzeitschwankung zu einer besseren Planbarkeit der Anlage.

Voraussetzung für eine derartige Optimierung ist jedoch Transparenz über den Prozess, um identifizieren zu können, welche Apparate der Grund für etwaige Verzögerungen des Prozesses sind. Diese Apparate werden als Engstellenapparate des Prozesses bezeichnet. Dabei kann der langsamste Apparat dieser Engstellenapparate (d.h. der langsamste Apparat des gesamten Prozesses) auch als "Bottleneck" bezeichnet werden. Beabsichtigte und unbeabsichtigte Änderungen am gesamten Prozess führen zu einer dynamischen Änderung des Prozesses und dazu, dass wenige Partien einen vergleichbaren zeitlichen Verlauf aufweisen.

Bei einer ganzheitlichen Optimierung eines Produktionsprozesses in komplexen Produktionsanlagen mit mehreren Apparaten ergeben sich folgende Herausforderungen:
▪ das Schaffen einer transparenten, objektiven Prozessübersicht ist sehr anspruchsvoll und mit hohem Aufwand (z.B. zeitlichem Aufwand) verbunden,
▪ das Identifizieren von Grundursachen,
▪ das Berücksichtigen sowohl kurzfristiger als auch langfristiger Trends in einem dynamischen Prozess,
▪ eine mitunter sehr begrenzte Anzahl an vergleichbaren Partien,
▪ eine niederschwellige Möglichkeit zur Erfolgskontrolle von umgesetzten technischen Maßnahmen.

Somit ist es ein Ziel der vorliegenden Erfindung, ein Verfahren zur Taktzeit- und/oder Verfügbarkeitsanalyse eines rezeptgesteuerten Prozesses in einer chemischen Produktionsanlage bereitzustellen, welches die zuvor genannten Nachteile des Stands der Technik zumindest teilweise überwindet.

### ZUSAMMENFASSUNG DER ERFINDUNG

Dies wird durch die in den unabhängigen Ansprüchen definierten Gegenstände gelöst. Vorteilhafte Modifikationen von Ausführungsformen der vorliegenden Offenbarung sind in den abhängigen Ansprüchen sowie in der Beschreibung und den Figuren definiert.

Ein Aspekt der Erfindung betrifft ein Verfahren zur Taktzeit- und/oder Verfügbarkeitsanalyse eines rezeptgesteuerten Prozesses in einer chemischen Produktionsanlage. Das Verfahren kann computer-implementiert sein.

Das Verfahren kann ein Bereitstellen einer Prozessdefinition umfassen. Die Prozessdefinition kann eine Anzahl von Apparaten der Produktionsanlage definieren. Bei mehr als einem Apparat kann die Prozessdefinition zusätzlich deren Abfolge in dem Prozess definieren (d.h. falls die Anzahl von Apparaten der Produktionsanlage größer 1 ist).

Das Verfahren kann ein Empfangen von Produktionsdaten der Produktionsanlage umfassen. Die Produktionsdaten können Informationen über ausgeführte Partien und/oder Rezeptschritte für eine Mehrzahl von Partien, welche die Anzahl von Apparaten durchlaufen, umfassen. Die ausgeführten Partien und/oder Rezeptschritte können aktuell ausgeführte Partien und/oder Rezeptschritte (d.h. die Partien und/oder die Rezeptschritte, welche die Anzahl von Apparaten aktuell durchlaufen), bereits ausgeführte Partien und/oder Rezeptschritte (d.h. die Partien und/oder die Rezeptschritte, welche die Anzahl von Apparaten bereits durchlaufen haben) und/oder zukünftige Rezeptschritte (d.h. die Rezeptschritte, welche die Anzahl von Apparaten nach den aktuell ausgeführten Rezeptschritten durchlaufen werden) umfassen.

Die Produktionsdaten können in Form eines Streams und/oder eines Logs empfangen werden. Im Falle eines Streams können die Produktionsdaten (z.B. mittels entsprechender Sensoren) aufgenommen oder gemessen werden und per Stream (z.B. in Echtzeit) gesendet und empfangen werden. Somit können die Produktionsdaten auch als Messdaten verstanden werden, welche einen aktuellen, physischen Zustand der Produktionsanlage (d.h. einer echten, physischen Produktionsanlage in welcher ein echter, physischer Produktionsprozess abläuft) repräsentieren. Im Falle eines Logs können die Produktionsdaten (z.B. mittels entsprechender Sensoren) aufgenommen oder gemessen werden, in ein Logfile (z.B. gespeichert in einer Datenbank) geschrieben werden und von diesem abgerufen bzw. empfangen werden. Die Produktionsdaten können eine Form aufweisen, welche für jede Partien und/oder für jeden Rezeptschritt eine mit der Partie und/oder dem Rezeptschritt assoziierte Zeitinformation (z.B. einen Zeitstempel) umfasst. Die Partie kann dabei durch einen Namen und/oder einen Identifizier (z.B. eine eindeutige ID, einen Index, eine Nummer etc.) repräsentiert werden. Eine beispielhafte Partie kann somit beispielsweise wie folgt in den Produktionsdaten enthalten sein: "Zeitinformation:ID". Der Rezeptschritt kann dabei durch einen Namen und/oder einen Identifizier (z.B. eine eindeutige ID, einen Index, eine Nummer etc.) repräsentiert werden. Ein beispielhafter Rezeptschritt kann somit beispielsweise wie folgt in den Produktionsdaten enthalten sein: "Zeitinformation:ID".

Das Verfahren kann ein automatisches Bestimmen zumindest einer Taktzeit und/oder einer Wartezeit und/oder einer Batchzeit umfassen. Dabei kann das Bestimmen der Taktzeit und/oder der Wartezeit und/oder der Batchzeit auf den Informationen über ausgeführte Partien und/oder Rezeptschritte für eine Mehrzahl von Partien, welche die Anzahl von Apparaten durchlaufen, basieren.

Die Taktzeit kann als die Aufenthaltsdauer einer Partie in einem Apparat bezeichnet werden. Von Partie zu Partie kann die Taktzeit eines Apparats einer Schwankung unterliegen. Innerhalb eines Apparats durchläuft eine Partie typischerweise verschiedene Verfahrensschritte, welche jeweils wertschöpfend oder nicht wertschöpfend sein können. Die Dauer dieser Verfahrensschritte kann sich von Partie zu Partie unterscheiden. Die Summe der wertschöpfenden Verfahrensschritte kann als Batchzeit einer Partie bezeichnet werden. Von Partie zu Partie unterliegt auch die Batchzeit eines Apparats einer Schwankung. Die Ausprägungen und Gründe für diese Schwankungen sind unterschiedlich und können sich im Verlauf der Zeit dynamisch ändern. Dies gilt für jeden einzelnen Apparat des Prozesses. Die Summe der nicht wertschöpfenden Verfahrensschritte kann als Wartezeiten einer Partie bezeichnet werden. Solche Wartezeiten entstehen beispielsweise, weil Apparate auf andere (z.B. im Prozess vorausgehende) Apparate warten müssen. Wartezeiten können auch aus Gründen, die außerhalb des Prozesses liegen, auftreten. Verfahrensschritte können einen oder mehrere Rezeptschritte umfassen. Somit ergeben sich die mittlere Taktzeit und die Taktzeitschwankung des gesamten Prozesses aus den Taktzeiten und Taktzeitschwankungen der einzelnen Apparate, die sich wiederrum aus den Batchzeiten und Wartezeiten sowie deren Schwankungen ergeben, welche sich wiederum aus den Rezeptschrittdauern sowie deren Schwankungen zusammensetzen.

Das Verfahren kann ein automatisches Auswerten zumindest der Batchzeit und/oder der Wartezeit und/oder der Taktzeit zumindest eines der Apparate zum Identifizieren zumindest eines Apparats aus der Anzahl von Apparaten als Engstellenapparat, welcher eine Taktzeit und/oder Verfügbarkeit des Prozesses beeinflusst, umfassen.

Das Verfahren kann ein Anzeigen von Analyseinformationen auf einer elektronischen Anzeigevorrichtung zur Verwendung bei einer Optimierung des Prozesses und/oder der Produktionsanlage durch einen Anwender umfassen. Die Analyseinformationen können zumindest den identifizierten zumindest einen Engstellenapparat umfassen.

Somit stellt das Verfahren eine Lösung bereit, um selbst hochkomplexe Produktionsanlagen zu analysieren und eine transparente, objektive Übersicht über die Produktionsanlage mittels der Analyseinformationen bereitzustellen. In anderen Worten stellt das Verfahren eine computer-basierte Unterstützung für Anwender bei der Durchführung der Analyse des Prozesses und/oder der Produktionsanlage bereit (d.h. eine gezielte Mensch-Maschine-Interaktion bei der durchgeführten technischen Aufgabe der Produktionsprozessanalyse). Basierend auf dieser Analyse können Ineffizienzen im Prozess identifiziert werden, welche ansonsten aufgrund der Komplexität des Prozesses verborgen geblieben wären. Insbesondere sind die Informationen in einem dem Anwender sehr vertrauten Format in Stunden und Minuten angegeben. Entsprechend können auf Basis der angezeigten Analyseinformationen effiziente Maßnahmen zur Optimierung des Prozesses und/oder der Produktionsanlage basierend auf identifizierten Grundursachen bestimmt werden. Gleichzeitig können auf subjektiven Einschätzungen beruhende, aber ineffiziente Maßnahmen vermieden werden.

Bei dem rezeptgesteuerten Prozess kann es sich um einen reinen Batchprozess und/oder einen Prozess, welcher Anteile von kontinuierlichen Prozessen enthalten kann, handeln. Ein Batchprozess umfasst mindestens einen Apparat mit Batch-Fahrweise. Ein Batchprozess kann linear oder verzweigt sein. Abgesehen von der chemischen Produktion kann das Verfahren auch zur Taktzeit- und/oder Verfügbarkeitsanalyse von Produktionsanlagen in anderen Domänen verwendet werden wie z.B.:
- Pharmazie,
- Automobil,
- Elektronik,
- Biotechnologie,
- Luft- und Raumfahrt,
- metallverarbeitende Industrie,
- kunststoffverarbeitende Industrie,
- Lebensmittelindustrie.

In einem weiteren Aspekt kann das Verfahren ferner ein automatisches Bestimmen zumindest einer Rezeptschrittdauer umfassen. Das automatische Bestimmen kann auf den Informationen über die ausgeführten Rezeptschritte für die Mehrzahl von Partien, welche die Anzahl von Apparaten durchlaufen, basieren. Das automatische Bestimmen zumindest der Taktzeit und/oder der Wartezeit und/oder der Batchzeit kann auf den Rezeptschrittdauern basieren.

Eine oder mehrere Rezeptschrittdauern können beispielsweise basierend auf den Zeitinformationen bestimmt werden, welche jedem Rezeptschritt zugeordnet sein können. Wie oben beschrieben können die Produktionsdaten eine Form aufweisen, welche für jeden Rezeptschritt eine mit dem Rezeptschritt assoziierte Zeitinformation sowie einen Namen und/oder einen Identifizier beinhalten. Diese können unter einem Rezeptschritt-Tag abgerufen werden. Wie oben beschrieben können die Produktionsdaten eine Form aufweisen, welche für jede Partie eine mit der Partie assoziierte Zeitinformation sowie einen Namen und/oder einen Identifizier beinhalten. Diese können unter einem Partie-Tag abgerufen werden.

Basierend auf diesen Rezeptschritt-Tags können die Rezeptschrittdauern bestimmt werden, indem ein Start- und ein Endzeitpunkt desselben Rezeptschritts mit Hilfe des Rezeptschritt-Tags bestimmt werden (d.h. Rezeptschrittdauer = Endzeitpunkt - Startzeitpunkt). Ein Alternativansatz besteht darin, die Rezeptschrittdauern durch ein Addieren bzw. Zusammenfügen der Zeitinformationen zu bestimmen. Hierfür werden die Zeitinformationen eines Partie-Tags und eines betreffenden Rezeptschritt-Tags so lange addiert/zusammengefügt, bis der Partie-Tag und/oder der Rezeptschritt-Tag seinen Wert ändert.

Das Bestimmen der Rezeptschrittdauern ermöglicht das effiziente Bestimmen der Verfahrensschritte bzw. Rezeptschritte, welche innerhalb eines Apparats hauptverantwortlichen Einfluss (d.h. großen Einfluss) auf die Dauer und/oder Schwankung der Taktzeit des Apparats (z.B. des identifizierten zumindest einen Engstellenapparats) haben.

In einem weiteren Aspekt können die Analyseinformationen Informationen über Randbedingungen der Produktionsanlage und/oder Informationen über den identifizierten zumindest einen Engstellenapparat und/oder Informationen über einen Satz von weiteren Engstellenapparaten und/oder Informationen über die ausgeführten Rezeptschritte und/oder Informationen über eine Vollständigkeit der verwendeten Zeitinformationen umfassen.

In einem weiteren Aspekt können die Informationen über Randbedingungen der Produktionsanlage einen konfigurierbaren Zeitraum, über welchen die Produktionsdaten gemessen wurden und/oder Informationen über die Anzahl von Apparaten umfassen.

In einem weiteren Aspekt können die Informationen über den zumindest einen identifizierten Engstellenapparat Rezeptschrittdauerinformationen des Engstellenapparats und/oder Batchzeitinformationen des Engstellenapparats und/oder Taktzeitinformationen des Engstellenapparats und/oder Wartezeitinformationen des Engstellenapparats und/oder Informationen über eine Verfügbarkeit des Engstellenapparats und/oder einen Zielwert für die Taktzeit des Engstellenapparats und/oder des Prozesses umfassen.

Insbesondere können die Rezeptschrittdauerinformationen des Engstellenapparats eine mittlere Rezeptschrittdauer und/oder eine Schwankung der Rezeptschrittdauer und/oder einen zeitlichen Verlauf der Rezeptschrittdauer umfassen. Insbesondere können die Batchzeitinformationen des Engstellenapparats eine mittlere Batchzeit und/oder eine Batchzeitschwankung und/oder einen zeitlichen Verlauf der Batchzeit umfassen. Insbesondere können die Taktzeitinformationen des Engstellenapparats eine mittlere Taktzeit und/oder eine Taktzeitschwankung und/oder einen zeitlichen Verlauf der Taktzeit umfassen. Insbesondere können die Wartezeitinformationen des Engstellenapparats eine mittlere Wartezeit und/oder einer Wartezeitschwankung und/oder einen zeitlichen Verlauf der Wartezeit und/oder eine Häufigkeit des Wartens und/oder eine Relevanz des Wartens für die Taktzeit des Prozesses umfassen.

In einem weiteren Aspekt können die Informationen über den Satz von weiteren Engstellenapparaten eine konfigurierbare Anzahl der Apparate für den Satz von weiteren Engstellenapparaten und/oder Rezeptschrittdauerinformationen des Satzes von weiteren Engstellenapparaten und/oder Batchzeitinformationen des Satzes von weiteren Engstellenapparaten und/oder Informationen über eine Verfügbarkeit des Satzes von weiteren Engstellenapparaten und/oder eine Priorisierungsangabe des Satzes von weiteren Engstellenapparaten hinsichtlich ihrer Relevanz auf die Taktzeit des Prozesses umfassen.

Insbesondere können die Rezeptschrittdauerinformationen des Satzes von weiteren Engstellenapparaten eine mittlere Rezeptschrittdauer und/oder eine Schwankung der Rezeptschrittdauer und/oder einen zeitlichen Verlauf der Rezeptschrittdauer umfassen. Insbesondere können die Batchzeitinformationen des Satzes von weiteren Engstellenapparaten eine mittlere Batchzeit und/oder eine Batchzeitschwankung und/oder einen zeitlichen Verlauf der Batchzeit umfassen.

In einem weiteren Aspekt können die Informationen über die ausgeführten Rezeptschritte Namen der ausgeführten Rezeptschritte und/oder eine Rezeptschrittdauer der jeweiligen Rezeptschritte umfassen.

Das Bereitstellen umfangreicher Analyseinformationen vereinfacht das Identifizieren von Optimierungspotentialen innerhalb des Prozesses. Insbesondere kann ein Anwender mittels Informationen über Randbedingungen (z.B. den konfigurierten Zeitraum) erkennen, ob die Analyse auf einem aussagekräftigen Satz von Produktionsdaten erstellt wurde (z.B. der ausreichend groß ist oder der sowohl kurzfristige als auch langfristige Trends berücksichtigt). Insbesondere kann ein Anwender mittels der Informationen über den zumindest einen identifizierten Engstellenappart und/oder die weiteren Engstellenapparate ein Ausmaß des Einflusses des zumindest einen Engstellenapparats und/oder der weiteren Engstellenapparte auf die Taktzeit und/oder Verfügbarkeit des Prozesses effizient erkennen bzw. ermitteln. Ein "Satz" wie hier verwendet kann eine Menge von einem oder mehreren Elementen beschreiben. In anderen Worten kann ein "Satz" auch als "ein oder mehrere" oder als "zumindest ein" verstanden werden.

In einem weiteren Aspekt kann das Anzeigen der Analyseinformationen auf einer grafischen und/oder statistischen Darstellung basieren.

In einem weiteren Aspekt kann die grafische Darstellung ein Boxplotdiagramm und/oder ein Zeitreihendiagramm und/oder ein Korrelationsdiagramm und/oder ein Wahrscheinlichkeitsnetzdiagramm und/oder eine Tabelle mit Balken, welche die Rezeptschrittdauern anzeigen, umfassen.

In einem weiteren Aspekt kann die statistische Darstellung eine Häufigkeitsangabe eines Rezeptschritts und /oder einer Taktzeit und/oder einer Wartezeit und/oder einer Batchzeit und/oder einen Minimalwert einer Rezeptschrittdauer und/oder einer Taktzeit und/oder einer Wartezeit und/oder einer Batchzeit und/oder einen Maximalwert einer Rezeptschrittdauer und/oder einer Taktzeit und/oder einer Wartezeit und/oder einer Batchzeit und/oder eine Angabe über ein oder mehrere Quartile, insbesondere über ein erstes und/oder ein drittes Quartil, einer Rezeptschrittdauer und/oder einer Taktzeit und/oder einer Wartezeit und/oder einer Batchzeit und/oder einen arithmetischen Mittelwert einer Rezeptschrittdauer und/oder einer Taktzeit und/oder einer Wartezeit und/oder einer Batchzeit und/oder einen Median einer Rezeptschrittdauer und/oder einer Taktzeit und/oder einer Wartezeit und/oder einer Batchzeit und/oder einen Stabilitätsfaktor eines Rezeptschritts und/oder einer Taktzeit und/oder einer Wartezeit und/oder einer Batchzeit umfassen.

In einem weiteren Aspekt kann das Verfahren ferner ein Empfangen einer Nutzereingabe, welche eine gewünschte Art der Darstellung der Analyseinformationen anzeigt, und ein Bereitstellen der Analyseinformationen basierend auf der durch die Nutzereingabe angezeigten gewünschten Art der Darstellung umfassen.

Durch die Möglichkeit eine Vielzahl von unterschiedlichen Kombinationen der Art der Darstellung (z.B. unterschiedliche grafische Darstellungen kombiniert mit statistischen Deskriptoren) auszuwählen, kann der komplexe Produktionsprozess aus unterschiedlichsten Blinkwinkeln betrachtet und bewertet werden. Somit ermöglicht das Verfahren dem Anwender eine zügige, vollumfängliche Analyse basierend auf welcher effiziente Maßnahmen zur Optimierung des Prozesses abgeleitet bzw. bestimmt werden können und ineffiziente Maßnahmen vermieden werden können.

In einem weiteren Aspekt kann die Nutzereingabe eine Dauer eines konfigurierbaren Zeitraums, für den die Produktionsdaten zum automatischen Auswerten verwendet werden sollen, und/oder eine Auswahl von Apparaten der Anzahl von Apparaten, welche zum automatischen Auswerten verwendet werden sollen, und/oder eine Auswahl von statistischen Deskriptoren, welche zum automatischen Auswerten verwendet werden sollen, und/oder eine Angabe eines Zielwerts für die Taktzeit des Prozesses umfassen.

Durch das Ändern der Dauer des konfigurierbaren Zeitraums kann beispielsweise ermittelt werden, ob ein identifizierter Engstellenapparat erst seit kurzer oder schon seit längerer Zeit geschwindigkeitsbestimmend für den Prozess ist. Somit können nicht nur kurzfristige, sondern auch langfristige Trends erkannt werden. Durch die Auswahl von Apparaten der Anzahl von Apparaten (z.B. Auswahl aller Apparate, Auswahl nur eines Teils der Apparate oder auch Auswahl nur eines Apparats) können beispielsweise gewisse Apparate ausgeklammert werden. Somit kann die Anzahl der zur analysierenden Produktionsdaten reduziert werden, wodurch Rechenressourcen gespart bzw. effizient genutzt werden können.

In einem weiteren Aspekt kann das Verfahren eine automatische Speicherung der Nutzereingabe umfassen.

Somit kann eine nutzerfreundliche Bedienung sichergestellt werden.

In einem weiteren Aspekt können die Informationen über ausgeführte Rezeptschritte für die Mehrzahl von Partien, welche die Anzahl von Apparaten durchlaufen, aus einer Datenbank empfangen werden, in welcher die Informationen enthalten sind, und/oder die Informationen über ausgeführte Rezeptschritte für die Mehrzahl von Partien, welche die Anzahl von Apparaten durchlaufen, von Sensoren und/oder Aktoren und/oder Datenschnittstellen der Produktionsanlage empfangen werden.

In einem weiteren Aspekt kann der identifizierte Engstellenapparat einen höchsten Quotienten aus Batchzeit und Zielwert und/oder die höchste Batchzeit aufweisen.

In einem weiteren Aspekt kann das Verfahren ein Durchführen einer Messsystemanalyse (MSA) zum Bestimmen einer Vollständigkeit der verwendeten Zeitinformationen umfassen.

Durch Angabe der Vollständigkeit der verwendeten Zeitinformationen (d.h. Taktzeiten und/oder Batchzeiten und/oder Wartezeit(en) und/oder Rezeptschrittdauer(n) und/oder Produktionsdaten) kann sichergestellt werden, dass bspw. keine zeitlichen Lücken existieren, aufgrund welcher die bereitgestellten Analyseinformationen wenig bis kaum aussagekräftig sein könnten (abhängig von dem Grad der Unvollständigkeit).

In einem weiteren Aspekt kann das Verfahren ein Bestimmen, dass weitere Produktionsdaten zur Verfügung stehen, ein erneutes Durchführen des automatischen Bestimmens und/oder Auswertens basierend auf den weiteren Produktionsdaten und ein Aktualisieren der angezeigten Analyseinformationen umfassen.

Hierdurch kann sichergestellt werden, dass alle relevanten Produktionsdaten (z.B. relevant hinsichtlich des konfigurierbaren Zeitraums und/oder der ausgewählten Apparate) zur Analyse verwendet werden. Somit können zeitlich aktuelle bzw. vollständige Analyseinformationen bereitgestellt werden auf deren Basis Maßnahmen zur Optimierung bestimmt werden können.

In einem weiteren Aspekt kann das Verfahren ein Bereitstellen einer Empfehlung für eine Maßnahme zur Optimierung des Prozesses und/oder der Produktionsanlage basierend auf den Analyseinformationen umfassen. Die Analyseinformationen können Hinweise auf Grundursachen liefern. Zusätzlich oder alternativ kann das Verfahren ein Bereitstellen einer Analyse für eine umgesetzte Maßnahme zur Optimierung des Prozesses und/oder der Produktionsanlage basierend auf den Analyseinformationen umfassen. Zusätzlich oder alternativ kann das Verfahren ein Empfangen einer Befehlseingabe durch den Anwender umfassend einer Maßnahme zur Optimierung des Prozesses und/oder der Produktionsanlage umfassen.

Durch das Bereitstellen einer Empfehlung für eine Maßnahme zur Optimierung des Prozesses und/oder der Produktionsanlage wird dem Anwender eine weitere Unterstützungsmaßnahme zur Verfügung gestellt. Das Bereitstellen kann beispielsweise auf Basis historischer Daten geschehen (z.B. mittels einem auf den historischen Daten trainierten KI-Systems wie einem Empfehlungssystem). Die historischen Daten können dabei Datenpaare bestehend aus Analyseinformationen und als effizient bewertete (d.h. gelabelte) Empfehlungen von Maßnahmen zur Optimierung umfassen.

Das Bereitstellen der Analyse einer umgesetzten Maßnahme zur Optimierung ermöglicht zudem eine Art Erfolgskontrolle (d.h. eine Bewertung, ob die Maßnahme den Prozess tatsächlich optimiert hat).

Durch die Möglichkeit direkt eine Befehlseingabe von dem Anwender zur Optimierung des Prozesses empfangen zu können, kann direkt in die Optimierung des Prozesses eingegriffen werden. Dies kann beispielsweise basierend auf der bereitgestellten Empfehlung basieren. Außerdem kann nachdem eine Befehlseingabe empfangen wurde, eine entsprechende Analyse der gemäß der Befehlseingabe umgesetzten Maßnahme zur Optimierung bereitgestellt werden (z.B. nach einer vordefinierten Anzahl von durchgelaufenen Partien).

In einem Aspekt betrifft die Erfindung eine Datenverarbeitungsvorrichtung umfassend Mittel zum Durchführen der Verfahren nach irgendeinem der erwähnten Aspekte.

In einem Aspekt betrifft die Erfindung ein Computerprogramm oder ein computerlesbares Medium, auf dem ein Computerprogramm gespeichert ist, wobei das Computerprogramm Anweisungen umfasst, die, wenn das Computerprogramm von einem Computer ausgeführt wird, den Computer veranlassen, das Verfahren nach irgendeinem der erwähnten Aspekte auszuführen.

### KURZBESCHREIBUNG DER FIGUREN

Die Erfindung kann anhand der folgenden Figuren besser verstanden werden:
- Fig. 1:: Ein Flussdiagramm eines computer-implementierten Verfahrens zur Taktzeit- und/oder Verfügbarkeitsanalyse gemäß einer beispielhaften Ausführungsform der vorliegenden Erfindung.
- Fig. 2:: Eine Datenverarbeitungsvorrichtung gemäß einer beispielhaften Ausführungsform der vorliegenden Erfindung.
- Fig. 3:: Eine statistische und grafische Anzeige von Analyseinformationen einer automatischen Bottleneck-Analyse gemäß einer beispielhaften Ausführungsform der vorliegenden Erfindung.
- Fig. 4:: Eine grafische Anzeige von Analyseinformationen mittels eines Boxplotdiagramms umfassend einen Zielwert für die Taktzeit des Prozesses gemäß einer beispielhaften Ausführungsform der vorliegenden Erfindung.
- Fig. 5:: Eine grafische Anzeige von Analyseinformationen mittels eines Boxplotdiagramms gemäß einer beispielhaften Ausführungsform der vorliegenden Erfindung zur Identifizierung von Grundursachen.
- Fig. 6:: Eine grafische Anzeige von Analyseinformationen mittels eines Zeitreihendiagramms gemäß einer beispielhaften Ausführungsform der vorliegenden Erfindung zur Erfolgskontrolle von umgesetzten technischen Maßnahmen.
- Fig. 7:: Eine grafische Anzeige von Analyseinformationen mittels eines Wahrscheinlichkeitsnetzdiagramms gemäß einer beispielhaften Ausführungsform der vorliegenden Erfindung.
- Fig. 8:: Eine grafische Benutzeroberfläche einer elektronischen Anzeigevorrichtung zur Eingabe von Nutzereingaben gemäß einer beispielhaften Ausführungsform der vorliegenden Erfindung.
- Fig. 9:: Eine statistische und grafische Anzeige von Analyseinformationen mittels einer Tabelle mit Balken, welche die Rezeptschrittdauern anzeigt, gemäß einer beispielhaften Ausführungsform der vorliegenden Erfindung.
- Fig. 10:: Eine Messystemanalyse (MSA) gemäß einer beispielhaften Ausführungsform der vorliegenden Erfindung.

### DETAILLIERTE BESCHREIBUNG

Im Folgenden werden repräsentative Ausführungsformen, die in den beigefügten Zeichnungen dargestellt sind, erläutert. Es sollte verstanden werden, dass die abgebildeten Ausführungsformen und die folgenden Beschreibungen sich auf Beispiele beziehen, die nicht dazu gedacht sind, die Ausführungsformen auf eine bevorzugte Ausführungsform zu beschränken.

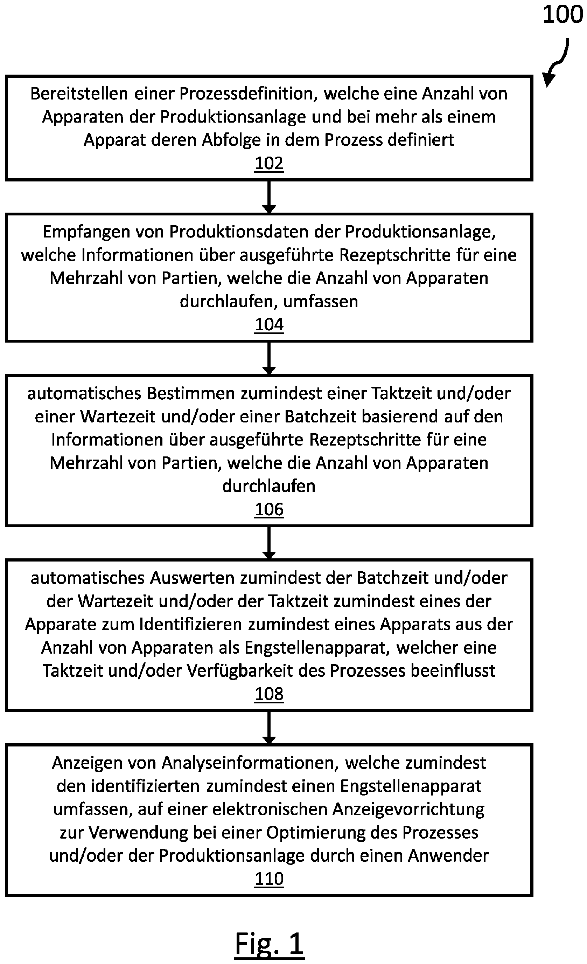

Fig. 1 zeigt ein Flussdiagramm eines computer-implementierten Verfahrens 100 zur Taktzeit-und/oder Verfügbarkeitsanalyse gemäß einer beispielhaften Ausführungsform der vorliegenden Erfindung. Das Verfahren 100 kann beispielsweise zur Taktzeit- und/oder Verfügbarkeitsanalyse eines rezeptgesteuerten Prozesses in einer chemischen Produktionsanlage verwendet werden. Das Verfahren 100 kann auch als automatische Bottleneck-Analyse bezeichnet werden.

Das Verfahren 100 kann ein Bereitstellen (Schritt 102) einer Prozessdefinition umfassen, welche eine Anzahl von Apparaten der Produktionsanlage und bei mehr als einem Apparat deren Abfolge in dem Prozess definiert.

Das Verfahren 100 kann ein Empfangen (Schritt 104) von Produktionsdaten der Produktionsanlage umfassen, welche Informationen über ausgeführte Rezeptschritte für eine Mehrzahl von Partien, welche die Anzahl von Apparaten durchlaufen, umfassen.

Das Verfahren 100 kann ein automatisches Bestimmen (Schritt 106) zumindest einer Taktzeit und/oder einer Wartezeit und/oder einer Batchzeit basierend auf den Informationen über ausgeführte Rezeptschritte für eine Mehrzahl von Partien, welche die Anzahl von Apparaten durchlaufen, umfassen.

Das Verfahren 100 kann ein automatisches Auswerten (Schritt 108) zumindest der Batchzeit und/oder der Wartezeit und/oder der Taktzeit zumindest eines der Apparate zum Identifizieren zumindest eines Apparats aus der Anzahl von Apparaten als Engstellenapparat, welcher eine Taktzeit und/oder Verfügbarkeit des Prozesses beeinflusst, umfassen.

Das Verfahren 100 kann ein Anzeigen (Schritt 110) von Analyseinformationen umfassen, welche zumindest den identifizierten zumindest einen Engstellenapparat umfassen, auf einer elektronischen Anzeigevorrichtung zur Verwendung bei einer Optimierung des Prozesses und/oder der Produktionsanlage durch einen Anwender.

Das Verfahren 100 kann ferner irgendeinen der oben erwähnten Aspekte umfassen.

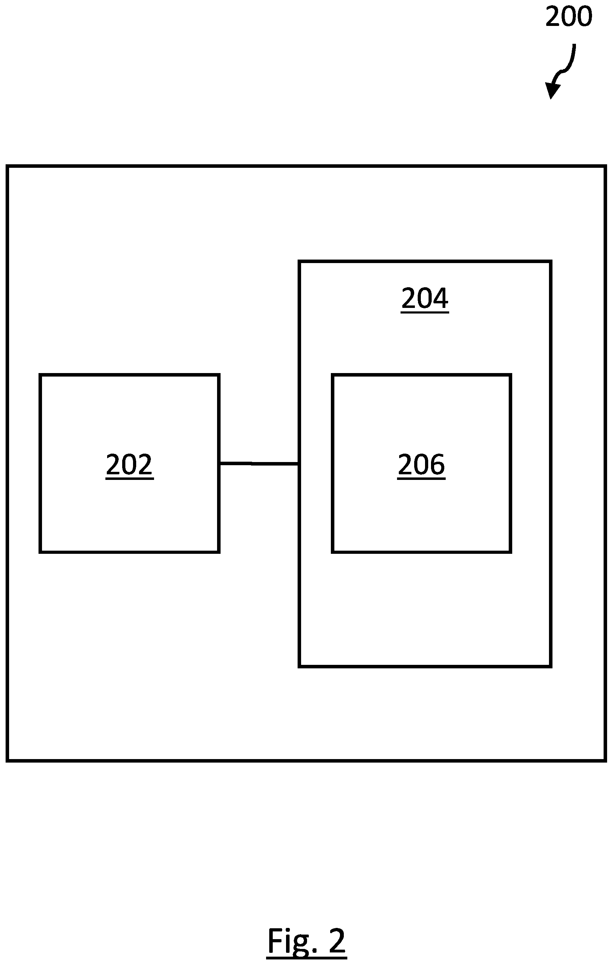

Fig. 2 zeigt eine Datenverarbeitungsvorrichtung 200 gemäß einer beispielhaften Ausführungsform der vorliegenden Erfindung.

Die Datenverarbeitungsvorrichtung kann Mittel zum Durchführen des Verfahrens gemäß der vorliegenden Offenbarung umfassen (z.B. das Verfahren 100). Bei den Mitten kann es sich um einen Prozessor 202 und einen Speicher 204 handeln. Der Prozessor 202 und der Speicher 204 können wirkverbunden sein. Im Speicher 204 kann ein Computerprogramm 206 gespeichert sein, wobei das Computerprogramm 206 Anweisungen umfasst, die, wenn das Computerprogramm 206 von einem Computer ausgeführt wird, den Computer veranlassen, das Verfahren nach irgendeinem der erwähnten Aspekte (z.B. das Verfahren 100) auszuführen.

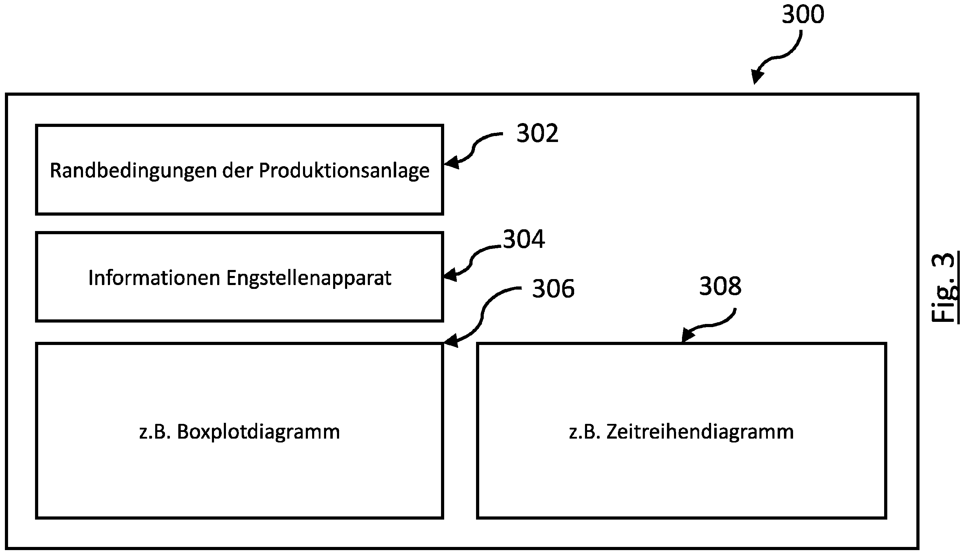

Fig. 3 zeigt eine statistische und grafische Anzeige von Analyseinformationen 300 einer automatischen Bottleneck-Analyse gemäß einer beispielhaften Ausführungsform der vorliegenden Erfindung.

Die Analyseinformationen 300 umfassen Informationen 302 über Randbedingungen der Produktionsanlage und Informationen 304 über den identifizierten zumindest einen Engstellenapparat. Die Informationen 302 umfassen Informationen über die Anzahl von Apparaten, einen konfigurierbaren Zeitraum, über welchen die Produktionsdaten gemessen wurden, sowie eine Voraussetzung, unter welcher die Analyse durchgeführt wurde.

Die Informationen über die Anzahl von Apparaten enthalten neben der Anzahl (z.B. 10) eine Auflistung der ausgewählten Apparate des betrachteten Prozesses. Zum Beispiel können 10 Apparate aufgelistet sein, wobei jeder Apparat durch eine ID (z.B. Unit A, Unit B, usw.) repräsentiert und eindeutig identifizierbar ist.

Die Informationen über den konfigurierten Zeitraum zeigt den Zeitraum, über welchen die gemessenen Produktionsdaten berücksichtig werden sollen für die Analyse. Zum Beispiel könnte der Zeitraum vom 1. Juli 2023 bis zum 30. September 2023 konfiguriert sein.

Die Informationen 304 über den identifizierten zumindest einen Engstellenapparat enthalten eine ID (z.B. die ID des Engstellenapparats Unit A). Zudem umfassen die Informationen 304 Batchzeit-, Taktzeit- und Wartezeitinformationen mittels einer statistischen Anzeige. So umfassen die Informationen 304 beispielsweise eine Häufigkeitsangabe der Partien (z.B. 106), einen Zielwert (z.B. für Takt- und Batchzeit, z.B. 17 Stunden), einen Median (z.B. für Batch- und Taktzeit 18:11 bzw. 19:09 Stunden sowie 0:07 Stunden für die Wartezeit), eine Angabe über mehrere Quartile (z.B. das erste Quartil Q1 und das dritte Quartil Q3 für jeweils Batch-, Takt- und Wartezeit), einen arithmetischen Mittelwert (z.B. für Batch- und Taktzeit 18:54 bzw. 20:40 Stunden sowie 1:46 Stunden für die Wartezeit) sowie einen Stabilitätsfaktor (z.B. 0.85 für die Batchzeit, 0.82 für die Taktzeit und 0.02 für die Wartezeit). Des Weiteren enthalten die Informationen 304 über den identifizierten zumindest einen Engstellenapparat Informationen über die Wartezeit des Engstellenapparats. Zum Beispiel kann der Engstellenapparat Unit A häufig Wartezeiten aufweisen (z.B. in 105 der 106 im Zeitraum erfassten Partien), welche im Mittelwert einen Einfluss von 1:46 Stunden auf die Taktzeit des Prozesses haben können. Die Bewertung kann z.B. erfolgen mittels eines regelbasierten Ansatzes, welcher zum Beispiel Schwellenwerte hinsichtlich einer Relation zwischen Einflusswert und Gesamtdauer des Prozesses beinhaltet, oder mittels einem auf künstlicher Intelligenz basierten Ansatz wie z.B. einem trainierten Klassifizierer. Der Einflusswert kann z.B. als "hoch" bestimmt werden.

Das Anzeigen der Analyseinformationen 300 kann ferner auf einer grafischen Anzeige 306 und 308 basieren. Im gezeigten Beispiel kann die grafische Anzeige 306 z.B. ein Boxplotdiagramm und die grafische Anzeige 308 z.B. ein Zeitreihendiagramm enthalten. Das Boxplotdiagramm zeigt die Batchzeiten alle Apparate der Anzahl von Apparaten (z.B. 10). Somit kann eine Übersicht über das Umfeld des identifizierten Engstellenapparats bereitgestellt werden. Das Zeitreihendiagramm zeigt zudem die zeitliche Entwicklung des identifizierten Engstellenapparats als Verlauf der Batch- und Taktzeiten.

Basierend auf der Batchzeit des Apparats (z.B. Unit A, Unit B, Unit C, etc.) kann eine Priorisierungsangabe hinsichtlich der Relevanz des Apparats (z.B. Unit A, Unit C, Unit B, etc.) auf die Taktzeit des Prozesses bestimmt werden. Im Falle, dass weitere Engstellenapparate identifiziert wurden, können die Analyseinformationen 300 auch diese Informationen umfassen. Dies kann in gleicherweise erfolgen wie für den einen identifizierten Engstellenapparat gezeigt. Dies wurde in dieser Abbildung jedoch aus Gründen der Übersichtlichkeit nicht gezeigt.

Die automatische Bottleneck-Analyse kann beispielsweise als Reaktion auf eine entsprechende Nutzereingabe angezeigt werden. Dies kann beispielsweise ausgehend von der grafischen Benutzeroberfläche 800 erfolgen.

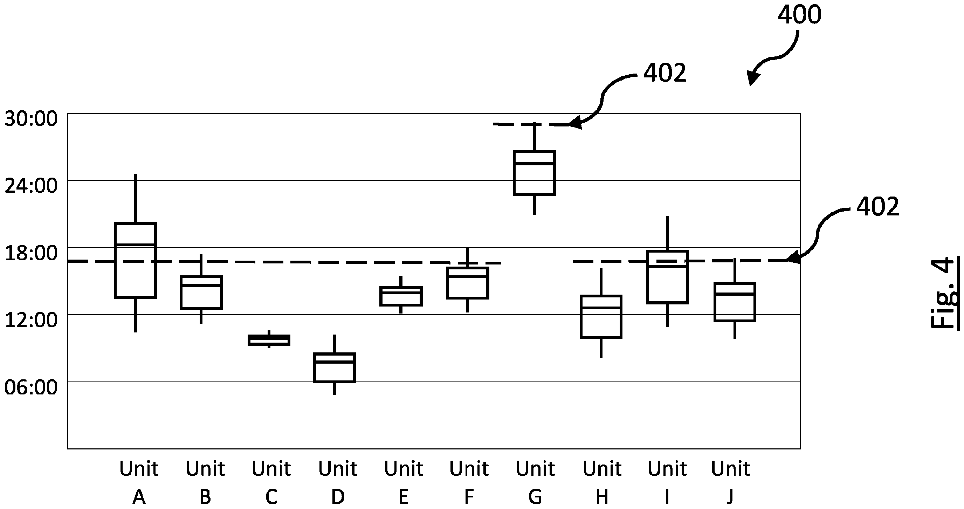

Fig. 4 zeigt eine grafische Anzeige von Analyseinformationen mittels eines Boxplotdiagramms 400 umfassend einen Zielwert für die Taktzeit des Prozesses gemäß einer beispielhaften Ausführungsform der vorliegenden Erfindung.

In diesem Diagramm sind auf der X-Achse Apparate (z.B. die Apparate Unit A-J) aufgeführt, während die Y-Achse die jeweilige Dauer zeigt, in diesem Beispiel die Dauer einer Batchzeit. In anderen Beispielen könnte sich die Dauer auf eine Taktzeit, eine Wartezeit oder einen Rezeptschritt beziehen. Die dem Boxplotdiagramm 400 zugrundeliegenden Analyseinformationen entsprechen denen in Fig. 3 gezeigten Analyseinformationen 300. Neben dem in Fig. 3 gezeigten automatischen Auswerten, ermöglicht das gezeigte Boxplotdiagramm 400 auch eine manuelle Auswertung durch den Anwender. Jedoch beinhaltet bzw. zeigt das Boxplotdiagramm 400 zusätzlich eine Visualisierung eines Zielwerts 402 (z.B. gewählt durch den Anwender oder festdefiniert) mittels einer waagrechten, gestrichelten Linie. Außerdem kann für jeden Apparat des Prozesses ein individueller Zielwert 402 definiert sein bzw. werden. Dies ist bevorzugt bei Prozessen zu wählen, in denen Apparate verschiedene Zieltaktzeiten aufweisen. Dadurch kann die Analyse auch auf diesen Arten von Prozessen laufen. So kann der Anwender basierend auf den mittels eines Boxplotdiagramms 400 gezeigten Analyseinformationen, welche die Anzahl der Apparate sowie die entsprechenden Batchzeiten sowie in Reaktion auf eine entsprechende Nutzereingabe (z.B. per Mausklick) auch die dazugehörigen Taktzeiten (hier nicht gezeigt) umfassen, Produktionsdaten des Prozesses auswerten.

Durch das Anzeigen eines geeigneten Zielwerts 402 hilft die Analyse nicht nur dabei zu erkennen, welche Apparate des Prozesses Engstellen sind, sondern sie ermöglicht es dem Anwender auch zu beurteilen, welche der Apparate über dem Zielwert liegen und wie weit sie darüber liegen. Zum Beispiel können Apparate, deren Median oberhalb der eingezeichneten Linie liegen, für die Optimierung des Prozesses und/oder der Produktionsanlage hin zur Zieltaktzeit relevant sein. Im gezeigten Beispiel ist dies der Apparat Unit A. Für die Apparate, deren Box von der Linie geschnitten wird (z.B. Unit I) muss individuell betrachtet werden, inwiefern sie bei der Optimierung berücksichtigt werden müssen. Hierzu kann beispielsweise der konfigurierbare Zeitraum vergrößert oder verkleinert werden um weitere Tendenzen (d.h. ob sich die entsprechenden Boxen über oder unter die Linie bewegen) erkennen zu können.

Das Boxplotdiagramm umfassend einen Zielwert für die Taktzeit des Prozesses kann beispielsweise als Reaktion auf eine entsprechende Nutzereingabe angezeigt werden. Dies kann beispielsweise ausgehend von der grafischen Benutzeroberfläche 800 erfolgen.

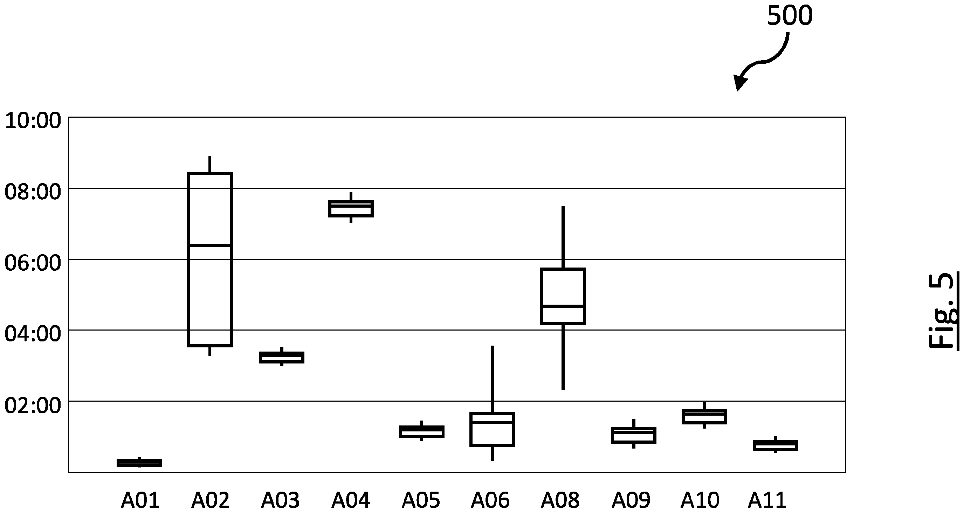

Fig. 5 zeigt eine grafische Anzeige von Analyseinformationen mittels eines Boxplotdiagramms 500 gemäß einer beispielhaften Ausführungsform der vorliegenden Erfindung zur Identifizierung von Grundursachen.

In diesem Diagramm sind auf der X-Achse Rezeptschritte (z.B. die Rezeptschritte A01-A11) aufgeführt, während die Y-Achse die jeweilige Dauer zeigt, in diesem Beispiel die Dauer eines Rezeptschrittes. In anderen Beispielen könnte sich die Dauer auf eine Taktzeit, eine Batchzeit oder eine Wartezeit beziehen. Das Boxplotdiagramm 500 enthält eine vom Anwender konfigurierte Auswahl an Rezeptschritten eines Apparats (z.B. eines als Engstellenapparat identifizierten Apparats Unit A). Anhand der Analyse kann ein Anwender Rezeptschrittdauern und deren Schwankungen erkennen. So kann beispielsweise erkannt werden, dass Rezeptschritt A02 im Beispiel die größte Schwankung der Rezeptschrittdauer aufweist (interquartiler Bereich ca. 5 Stunden) und Rezeptschritt A08 die nächstgrößte Schwankung der Rezeptschrittdauer aufweist (interquartiler Bereich ca. 1,5 Stunden). Außerdem ist erkennbar, dass Rezeptschritt A04 im Beispiel die größte Rezeptschrittdauer von ca. 7,5 Stunden im Median aufweist), gefolgt von Rezeptschritt A02 mit ca. 6,5 Stunden im Median. Zudem ist erkennbar, dass die Rezeptschritte A01, A03, A05, A09, A10 und A11 vergleichsweise geringe Schwankungen aufweisen und dass die Rezeptschritte A01, A03, A05, A06, A09, A10 und A11 vergleichsweise schnell ablaufen, d.h. einen geringen Median aufweisen.

Das Boxplotdiagramm kann beispielsweise als Reaktion auf eine entsprechende Nutzereingabe angezeigt werden. Dies kann beispielsweise ausgehend von der grafischen Benutzeroberfläche 800 erfolgen.

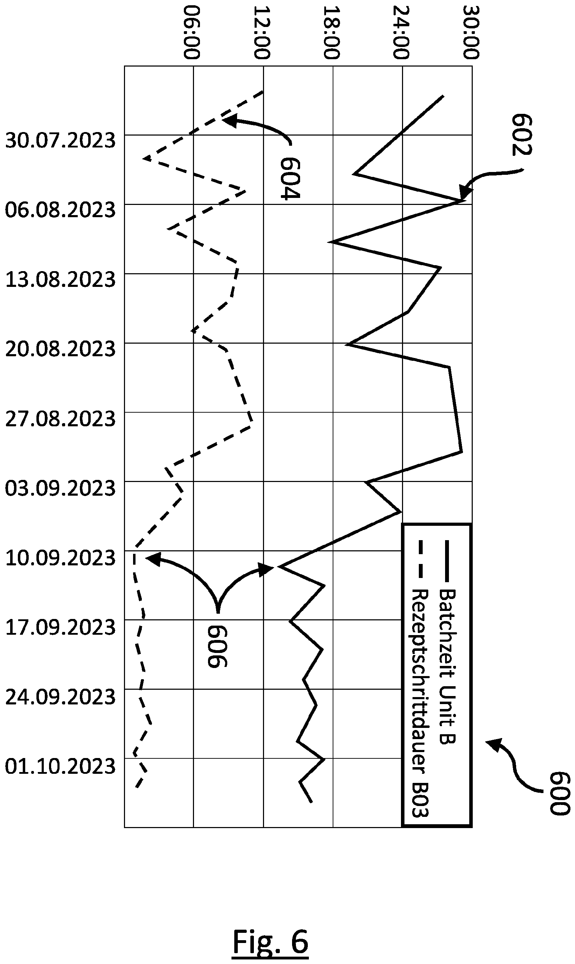

Fig. 6 zeigt eine grafische Anzeige von Analyseinformationen mittels eines Zeitreihendiagramms 600 gemäß einer beispielhaften Ausführungsform der vorliegenden Erfindung zur Erfolgskontrolle von umgesetzten technischen Maßnahmen.

Das Zeitreihendiagramm eignet sich besonders, um zeitliche Änderungen in der Takt-, Batch- und Rezeptschrittzeit zu erkennen, sowie um Trends nachverfolgen zu können. In diesem Diagramm sind auf der X-Achse die einzelnen Partien nach ihrem Startzeitpunkt aufgeführt, während die Y-Achse die jeweilige Dauer zeigt. Die durchgezogene Linie 602 steht im dargestellten Beispiel für die Batchzeit der Unit B, während die gestrichelte Linie 604 für die Rezeptschrittdauer des vom Apparat Unit B ausgeführten Rezeptschritts B03 steht. Im Beispiel ist außerdem zu erkennen, wie sich eine umgesetzte technische Maßnahme zur Optimierung des Apparats Unit B betreffend des Rezeptschrittes B03 nachverfolgen, bzw. ihr Erfolg kontrollieren lässt. So verläuft der Rezeptschritt B03 im Beispiel ab ca. dem 10.09.2023 (606) deutlich schneller und mit weniger Schwankungen als zuvor. Gleichzeitig weißt die Batchzeit des Apparats Unit B geringere Dauern und Schwankungen auf. Durch das Ausführen des computer-implementierten Verfahren zur Taktzeit- und/oder Verfügbarkeitsanalyse eines rezeptgesteuerten Prozesses gemäß Aspekten der vorliegenden Erfindung, konnten Schwankungen innerhalb des Produktionsprozesses schnell und effizient identifiziert werden und mittels entsprechender Maßnahmen zur Optimierung des Prozesses behoben werden.

Wenn zusätzlich zur Batchzeit des Apparats Unit B auch die Taktzeit des Apparats Unit B eingeblendet wird (hier nicht gezeigt), kann beispielweise erkannt werden, wann ein Apparat für die Taktzeit des gesamten Prozesses verantwortlich war (d.h. wenn seine Takt- und Batchzeiten gleich sind) und wann dieser Apparat Wartezeiten hatte (d.h. Taktzeit ≠ Batchzeit). Für welche Partien das zutrifft kann sich der Anwender innerhalb der Grafik anzeigen lassen.

In einem anderen Beispiel könnte die Taktzeit eines Bottlenecks verlängert werden, wenn die durchschnittliche Taktzeit des Prozesses länger als die Batchzeit des Bottlenecks ist. Mit anderen Worten: das Bottleneck benötigt ohnehin am längsten für all seine wertschöpfenden Verfahrensschritte und muss zusätzlich hin und wieder noch auf andere Apparate des Prozesses warten.

Das Zeitreihendiagramm kann beispielsweise als Reaktion auf eine entsprechende Nutzereingabe angezeigt werden. Dies kann beispielsweise ausgehend von der grafischen Benutzeroberfläche 800 erfolgen. In dem gezeigten Zeitreihendiagramm sind lediglich die Zeitreihen der Batchzeit des Apparats Unit B und die Rezeptschrittdauer des Rezeptschritts B03 gezeigt. Die anderen Apparate sind ausgeblendet (z.B. mittels einer entsprechenden Nutzereingabe zum Selektieren). Ein Datenpunkt der jeweiligen Zeitreihe umfasst dabei eine Partie (z.B. Namen und/oder ID), einen Startzeitpunkt der Partie (z.B. Zeitstempel) sowie eine Dauer (z.B. 40:13 Stunden). Eine entsprechende Anzeige kann z.B. mittels eines Hovers implementiert sein.

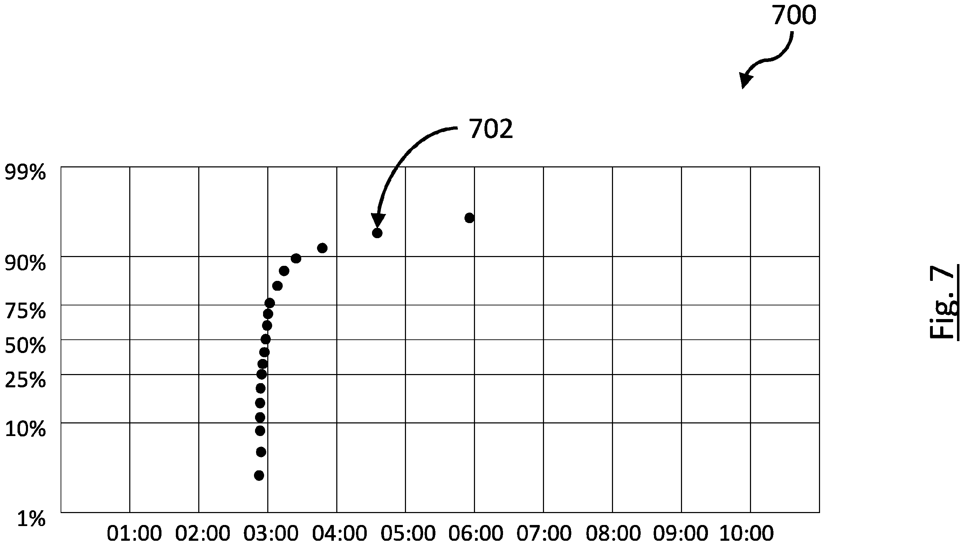

Fig. 7 zeigt eine grafische Anzeige von Analyseinformationen mittels eines Wahrscheinlichkeitsnetzdiagramms (700) gemäß einer beispielhaften Ausführungsform der vorliegenden Erfindung.

Das Wahrscheinlichkeitsnetz (700) eignet sich besonders, die Schwankung der Takt- und Batchzeit sowie die Verfügbarkeit darzustellen. Hier ist auf der X-Achse die Dauer der Partie aufgetragen, während die doppeltlogarithmische Y-Achse den Prozentsatz der Partien beschreibt. Das Wahrscheinlichkeitsnetz zeigt, wieviel Prozent der betrachteten Partien eine beliebige Takt- oder Batchzeit über- oder unterschreiten und wie stabil der Prozess ist. Im ausgewählten Beispiel sind rund 50 % der Partien schneller als ca. 3:00 Stunden bei einem interquartilen Bereich von ca. 10 Minuten.

Das Wahrscheinlichkeitsdiagramm (700) ermöglichte es dem Nutzer zusätzlich zu beurteilen, wieviel Prozent der Partien einer für den Nutzer akzeptablen Schwankung der Takt- oder Batchzeit unterliegen, hier z.B. 90 %, und in wieviel Prozent der Partien es zu großen Schwankungen der Takt- und Batchzeit gekommen sein kann, die der Nutzer als Verfügbarkeitsverluste des Prozesses interpretieren kann.

Das Wahrscheinlichkeitsdiagramm (700) ermöglichte es dem Nutzer an Hand seiner Form zusätzlich zu beurteilen, ob die dargestellten Daten einer Normalverteilung unterliegen oder nicht.

Das Wahrscheinlichkeitsnetzdiagramm (700) kann beispielsweise als Reaktion auf eine entsprechende Nutzereingabe angezeigt werden. Dies kann beispielsweise ausgehend von der grafischen Benutzeroberfläche 800 erfolgen. In dem gezeigten Wahrscheinlichkeitsnetzdiagramm ist lediglich die Batchzeit eines Apparats gezeigt. Die anderen Apparate sind ausgeblendet (z.B. mittels einer entsprechenden Nutzereingabe zum Selektieren). Ein Datenpunkt 702 der Wahrscheinlichkeitsnetzdiagramms umfasst dabei eine Partie (z.B. Namen und/oder ID, z.B. Partie 417), einen Prozentsatz, der anzeigt wie viele Partien schneller als die ausgewählte Partie sind (hier ca. 95 %) sowie eine Dauer der Partie (z.B. 4:35 Stunden). Eine entsprechende Anzeige kann z.B. mittels eines Hovers implementiert sein.

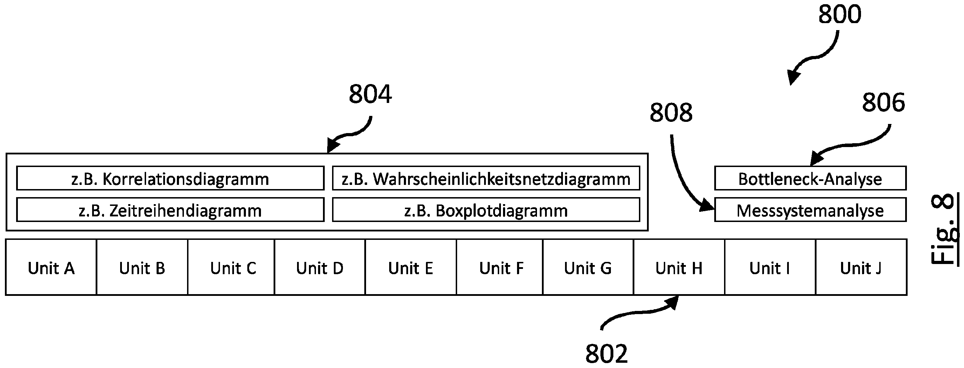

Fig. 8 zeigt eine grafische Benutzeroberfläche 800 einer elektronischen Anzeigevorrichtung zur Eingabe von Nutzereingaben gemäß einer beispielhaften Ausführungsform der vorliegenden Erfindung.

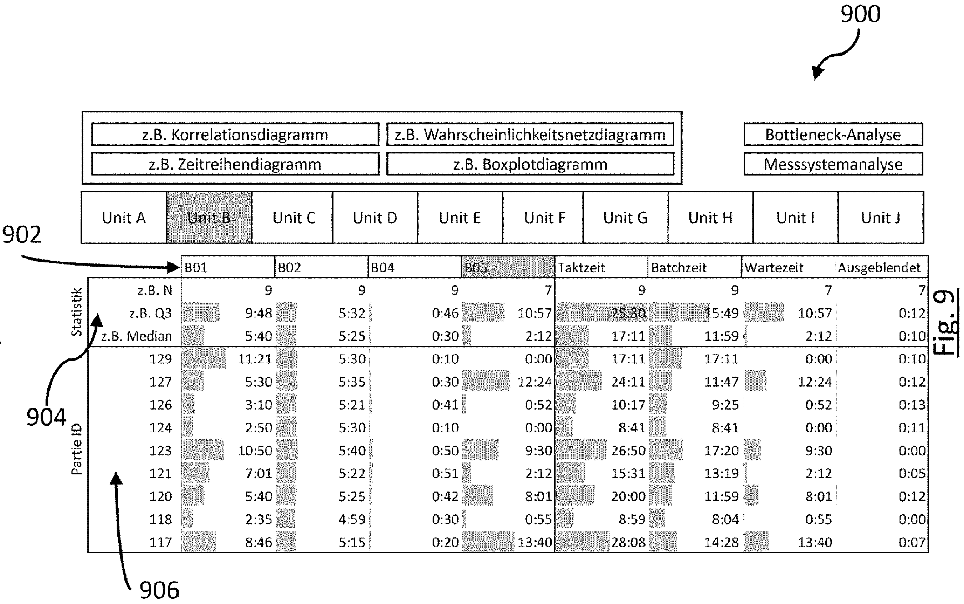

Die grafische Benutzeroberfläche 800 ermöglicht einem Anwender Nutzer- und Befehlseingaben auszulösen. Die grafische Benutzeroberfläche 800 kann beispielsweise ein Startbildschirm sein, über welchen eine Nutzereingabe eingegeben werden kann. Diese kann beispielsweise eine Dauer eines konfigurierbaren Zeitraums, für den die Produktionsdaten zum automatischen Auswerten verwendet werden sollen und/oder eine Auswahl von Apparaten der Anzahl von Apparaten, welche zum automatischen Auswerten verwendet werden sollen und/oder eine Auswahl von statistischen Deskriptoren, welche zum automatischen Auswerten verwendet werden sollen und/oder eine Angabe eines Zielwerts 402 für die Taktzeit des Prozesses umfassen. Mittels der Benutzeroberfläche 800 kann außerdem ein Nutzereingabe eingegeben werden, welche eine gewünschte Art der Darstellung von Analyseinformationen anzeigt. In anderen Worten ausgehend von der grafischen Benutzeroberfläche kann das Anzeigen der Analyseinformation (z.B. grafische oder statistische Darstellung) angepasst werden. So kann beispielsweise mittels einer Nutzereingabe (z.B. ein Mausklick auf einen der angezeigten Apparate 802) eine Analyseinformation (z.B. eine Tabelle mit Balken, welche die Rezeptschrittdauern anzeigen) geöffnet werden (siehe Figur 9). Durch eine entsprechende Nutzereingabe kann auch das Anzeigen weiterer Anzeigen 804 (z.B. ein Zeitreihendiagramm, ein Boxplotdiagramm, ein Wahrscheinlichkeitsnetzdiagramm, ein Korrelationsdiagramm) initialisiert werden. Durch eine entsprechende Nutzereingabe kann außerdem eine gewünschte Analyse (z.B. eine automatische Bottleneck-Analyse 806 oder eine Messsystemanalyse 808) initialisiert werden.

Fig. 9 zeigt eine statistische und grafische Anzeige von Analyseinformationen mittels einer Tabelle 900 mit Balken, welche die Rezeptschrittdauern anzeigt, gemäß einer beispielhaften Ausführungsform der vorliegenden Erfindung.

Wie zu Fig. 8 beschrieben, kann die Tabelle 900 als eine Tabelle mit Balken zum Anzeigen von Analyseinformationen implementiert sein. Zur Erstellung dieser Tabelle können wie oben beschrieben, die empfangenen Produktionsdaten verwendet werden, zum Beispiel die Zeitreihen der für den konfigurierten Zeitraum definierten Partie- und Rezeptschritt-Tags, insbesondere mit unregelmäßigen Einträgen. Die Tabelle kann eine obere Zeile 902 enthalten, die Namen von Rezeptschritten (z.B. die Namen der Rezeptschritte B01, B02, etc.) enthält, eine Anzahl an Zeilen 904, die statistische Kenngrößen enthalten und eine Anzahl an Zeilen 906, die Partienummern enthalten.

In den Zeilen 904 kann eine statistische Anzeige der Analyseinformationen enthalten sein. In dem gezeigten Beispiel umfasst die statistische Anzeige einen Häufigkeitsangabe (hier "N") des Rezeptschrittes, welche angibt wie häufig der Rezeptschritt länger als eine vordefinierte Dauer (z.B. mindestens 1 Minute) ist, einen Maximalwert der Rezeptschrittdauer, ("Max", hier nicht dargestellt), einen arithmetischen Mittelwert der Rezeptschrittdauer (hier nicht dargestellt), einen Median der Rezeptschrittdauer, ein erstes Quartil der Rezeptschrittdauer ("Q1", hier nicht dargestellt), ein drittes Quartil der Rezeptschrittdauer (hier "Q3"), einen Minimalwert der Rezeptschrittdauer ("Min", hier nicht dargestellt) sowie einen Stabilitätsfaktor (z.B. der Quotient des ersten Quartils Q1 und eines dritten Quartils Q3 der Rezeptschrittdauer, hier nicht dargestellt) des Rezeptschrittes. Die statistische Anzeige kann analoge statistische Informationen zu den Taktzeiten, Batchzeiten, Wartezeiten und ausgeblendeten Rezeptschritten enthalten.

Das Anzeigen dieser statistischen Auswertung kann mittels einer Nutzereingabe erfolgen (z.B. Mittels Auswahl der entsprechenden statistischen Deskriptoren in einem Drop-Down Menü etc.). Die der Auswertung zugrundeliegenden Produktionsdaten können dabei auf vollständige Partien im betrachteten (d.h. im konfigurierbaren) Zeitraum beschränkt sein. So kann z.B. die neueste und älteste Partie nicht berücksichtig werden, weil für diese keine Vollständigkeit hinsichtlich der Daten garantiert werden kann.

Zeitreihen mit unregelmäßigen Einträgen können interpoliert werden (z.B. nach dem Fill-Forward Prinzip), sodass Zeitreihen mit regelmäßigen (z.B. minütlich) Einträgen entstehen. In anderen Worten: eine Zeitreihe, in der sich der Wert eines Partie-Tags (z.B. eine ID der Partie und/oder ein Name der Partie) und eines Rezeptschritt-Tags (z.B. eine ID des Rezeptschrittes und/oder ein Name des Rezeptschrittes) in einer regelmäßigen Periode (z.B. minütlich) wiederholt, bis sich dieser Wert das erste Mal ändert (d.h. ein anderer Rezeptschritt startet) und sich der Wert des neuen Rezeptschritts wiederholt. Dadurch ist jeder Zeitpunkt in der Zeitreihe eindeutig einer Partie und einem konkreten Rezeptschritt zugeordnet, wodurch in der Darstellung keine Zeiten verloren gehen.

Anschließend können die Einträge der Zeitreihe, welche mit dem identischen Wert des Rezeptschritt-Tags assoziiert sind, zu einer einzelnen Zeitreihe zusammengesetzt werden, wodurch die Rezeptschrittdauer des zugehörigen Rezeptschritts genau bestimmt werden kann. Insbesondere setzt dies anders als bei anderen Ansätzen (z.B. Bestimmung der Start-und Endzeitpunkte basierend auf den Rezeptschritt-Tags) keine vorherige Kenntnis über die vorhanden Rezeptschritt-Namen voraus, wodurch das Bestimmen robust und flexibler ist. Dies kann insbesondere dann eine große Bedeutung haben, wenn dynamisch an vielen Stellen des Prozesses gleichzeitig Optimierungen durchgeführt werden und es dabei häufig zu Änderungen an Rezeptschritt-Namen kommt. Sind die Rezeptschrittdauern bestimmt, können die Daten nach Partie und Rezeptschritt gruppiert werden. Die bestimmten Rezeptschrittdauern können dann innerhalb der Tabelle neben den entsprechenden Rezeptschritten als Balken, welche die zugehörige Rezeptschrittdauer anzeigt, angezeigt werden. Das Format der Rezeptschrittdauern kann beispielsweise in "hh:mm" (d.h. Stunden und Minuten) angegeben werden. Die Balken können farbig angezeigt werden. Die Länge eines Balkens kann dabei proportional zu einem Grenzwert (z.B. 24:00, d.h. 24 Stunden) bestimmt werden und kann danach einen Vollausschlag erreichen. Durch diese Anzeige kann somit innerhalb der Tabelle eine erste visuelle Analyse bereitgestellt werden, wie schwankend oder stabil die einzelnen Rezeptschritte verlaufen und wie lange sie dauern. Außerdem stehen durch die Sortierung der Rezeptschritte die gleichen Rezeptschritte übereinander in der Tabelle, wodurch Trends in der Entwicklung der einzelnen Rezeptschrittdauern einfach erkennbar sind.

Somit kann in periodischer (z.B. minütlich) Auflösung angezeigt werden, wie lange ein beliebiger Rezeptschritt in einer beliebigen Partie der Produktion gedauert hat. Dabei können die Partien antichronologisch sortiert sein. Die Rezeptschritte können numerisch und/oder alphabetisch sortiert sein, wodurch sich automatisch die Reihenfolge der Rezeptschritte ergibt (z.B. da diese aufsteigend nummeriert sind). Mittels einer weiteren Nutzereingabe hat der Anwender zudem die Möglichkeit einzelne Rezeptschritte auszuwählen. Z.B. kann ein Nutzereingabe ein Selektieren zwischen wertschöpfenden und nicht-wertschöpfenden Rezeptschritten umfassen. Ausgewählte Rezeptschritte können innerhalb der Tabelle farblich hervorgehoben sein (z.B. Rezeptschritt B05, welcher als nicht-wertschöpfender Rezeptschritt selektiert wurde). Zusätzlich oder alternativ kann das Selektieren ein Ein- und Ausblenden (z.B. von irrelevanten) Rezeptschritten umfassen. Die auf diese Weise mittels der Nutzereingabe selektierten Rezeptschritte können automatisch gespeichert werden (z.B. in einem Anwenderprofil bzw. Benutzereinstellungen), so dass diese bei erneuter Verwendung automatisch geladen werden können.

Die letzten vier Spalten auf der rechten Seite der Tabelle 900 können die Taktzeit, die Batchzeit, die Wartezeit sowie die Summe aller ausgeblendeten Rezeptschritte (hier "Ausgeblendet") zeigen. Die angezeigte Taktzeit kann sich dabei auf Summe alle Rezeptschrittdauern einer Partie beziehen. Die angezeigte Batchzeit kann sich dabei auf die Summe aller wertschöpfenden Rezeptschrittdauern einer Partie beziehen. Die angezeigte Wartezeit kann sich dabei auf die Summe aller Wartezeiten einer Partie beziehen. Obwohl ausgeblendet, können die ausgeblendeten Rezeptschrittdauern dennoch bei der Bestimmung von Takt-, Batch- und/oder Wartezeiten berücksichtig werden. Eine Angabe des Zielwerts für die Taktzeit des Prozesses kann beispielsweise durch eine Nutzereingabe des Anwenders über ein Drop-Down Menü erfolgen. Die Angabe kann entweder für alle Apparate des Prozesses, für eine Gruppe der Apparate oder für jeden Apparat einzeln festgelegt werden. Das Drop-Down Menü kann beispielsweise als Reaktion auf ein Klicken eines grafischen Benutzerelements erscheinen.

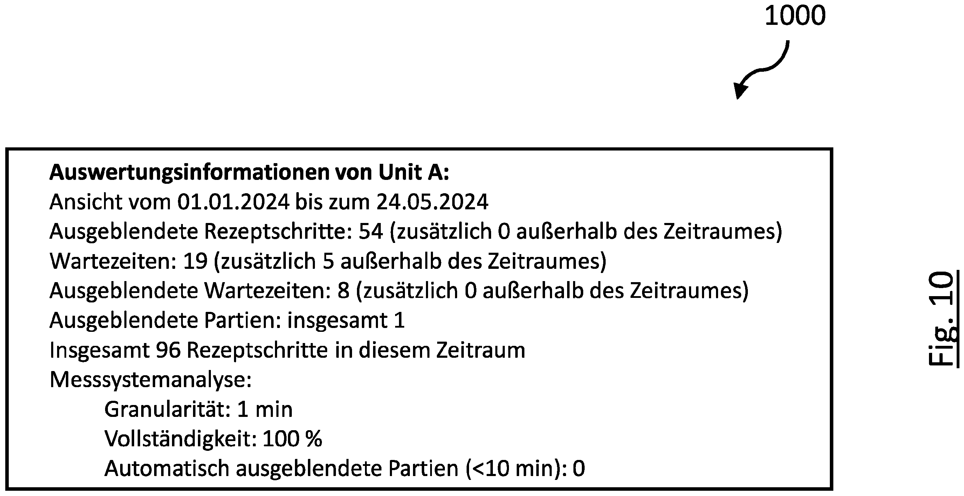

Fig. 10 zeigt eine Messystemanalyse (MSA) 1000 gemäß einer beispielhaften Ausführungsform der vorliegenden Erfindung.

Die MSA kann zum Bestimmen einer Vollständigkeit der Analyseinformationen, insbesondere der verwendeten Zeitinformationen (z.B. Takt- und/oder Batchzeiten und/oder Rezeptschrittdauern) verwendet werden. Somit kann es vermieden werden, dass eine Analyse basierend auf unvollständigen Informationen (d.h. Informationen mit zeitlichen Lücken) durchgeführt wird. Hierfür kann die MSA die verwendeten Informationen auf Fehler überprüfen. Fehler (wie z.B. zeitliche Lücken) können beispielsweise durch Verbindungsprobleme, Interferenzen oder Sensorfehler entstehen. Dann können Produktionsdaten an den entsprechenden Zeitpunkten fehlen.

Die MSA 1000 kann Auswertungsinformationen eines untersuchten Apparats umfassen. Im gezeigten Beispiel umfasst die MSA 1000 Auswertungsinformationen des Apparats Unit A. Die Auswertungsinformationen umfassen die Dauer des konfigurierbaren Zeitraums (d.h. den Zeitraum, über welchen die Analyseinformationen für die MSA verwendet wurden). Die Auswertungsinformationen können zudem eine Anzahl von ausgeblendeten Rezeptschritten) innerhalb und/oder außerhalb des konfigurierbaren Zeitraums, eine Anzahl von Wartezeiten innerhalb und/oder außerhalb des konfigurierbaren Zeitraums, ausgeblendete Wartezeiten innerhalb und/oder außerhalb des konfigurierbaren Zeitraums, eine Anzahl von ausgeblendeten Partien innerhalb und/oder außerhalb des konfigurierbaren Zeitraums und/oder eine Anzahl von Prozessschritten innerhalb und/oder außerhalb des konfigurierbaren Zeitraums umfassen.

Das Ergebnis der MSA 1000 kann eine Granularität (z.B. 1 Minute) umfassen. Die Granularität kann vordefiniert und/oder vom Anwender flexibel einstellbar sein (z.B. vor dem Durchführen der MSA mittels einer Parametrisierungskonfiguration). Das Ergebnis kann eine Angabe zur Vollständigkeit der verwendeten Informationen umfassen (z.B. in Prozent, hier 100 % was signalisiert, dass keine Fehler wie z.B. Datenlücken in den verwendeten Informationen existieren). Zudem kann das Ergebnis der MSA eine Angabe über ausgeblendete Partien (z.B. absolute Zahl), welche eine vordefinierte Dauer unterschreiten (z.B. 10 Minuten), umfassen.

Durchführen der MSA kann ein periodisches Abfragen gemäß der Granularität von Produktionsdaten innerhalb des konfigurierbaren Zeitraums. Hierdurch kann beispielsweise jede Minute (d.h. Granularität = 1 Minute) ein Wert eines verwendeten Partie-Tags und Rezeptschritt-Tags ermittelt werden. Sollte jeder Minute innerhalb des konfigurierbaren Zeitraum ein eindeutiger Wert dem Partie-Tag und/oder Rezeptschritt-Tag einer Partie zugeordnet werden können, so kann eine 100 % Vollständigkeit ausgegeben werden. Somit wäre eine vollständige Auswertung innerhalb des konfigurierbaren Zeitraums sichergestellt.

Eine vollständige Auswertung kann beispielsweise dann nicht möglich sein, wenn aufgrund von Fehlern kein Partie-Tag und/oder Rezeptschritt-Tag über einen gewissen Zeitraum des konfigurierbaren Zeitraums geschrieben wird. Somit entstehende Lücken können in der MSA ausgewiesen werden. Die falschen Datenpunkte können auch entsprechend gekennzeichnet werden, damit ein Anwender diese schnell identifizieren kann und diese ggfs. ausblenden oder entfernen kann.

Eine vollständige Auswertung kann außerdem dann nicht möglich sein, wenn aufgrund von Fehlern der Rezeptschritt-Tag und/oder der Partie-Tag über einen gewissen Zeitraum des konfigurierbaren Zeitraum keinen Wert enthält. Dann kann eine Interpolation (z.B. mittels Forward-Filling) erfolgen. Bei dem Forward-Filling wird der zuletzt geschriebene Wert des Partie-Tags und/oder Rezeptschritt-Tags verwendet, um den gewissen Zeitraum aufzufüllen. Hierdurch entsteht dann eine für den Anwender leicht erkennbare, weil auffällig lange Rezeptschrittdauer (z.B. angezeigt durch einen entsprechend langen Balken) und/oder eine Lücke in notwendigen Rezeptschritten, d.h. Rezeptschritten die der Prozess durchlaufen haben muss. Dieser Fehler kann dann durch den Anwender leicht behoben werden (z.B. indem der auffällige lange Rezeptschritt entfernt wird).

Die Messsystemanalyse kann beispielsweise als Reaktion auf eine entsprechende Nutzereingabe angezeigt werden. Dies kann beispielsweise ausgehend von der grafischen Benutzeroberfläche 800 erfolgen.

Der hier verwendete Begriff "und/oder" schließt alle Kombinationen von einem oder mehreren der aufgeführten Aspekte ein und kann mit "/" abgekürzt werden.

Obwohl einige Aspekte im Zusammenhang mit einem Gerät beschrieben wurden, ist es klar, dass diese Aspekte auch eine Beschreibung des entsprechenden Verfahrens darstellen, wobei ein Block oder eine Vorrichtung einem Verfahrensschritt oder einem Merkmal eines Verfahrensschritts entspricht. Analog dazu stellen Aspekte, die im Zusammenhang mit einem Verfahrensschritt beschrieben werden, auch eine Beschreibung eines entsprechenden Blocks oder Elements oder Merkmals eines entsprechenden Geräts dar.

Ausführungsformen der vorliegenden Offenbarung können auf einem Computersystem implementiert werden. Bei dem Computersystem kann es sich um ein lokales Computergerät (z. B. Personalcomputer, Laptop, Tablet-Computer oder Mobiltelefon) mit einem oder mehreren Prozessoren und einem oder mehreren Speichergeräten handeln oder um ein verteiltes Computersystem (z. B. ein Cloud-Computersystem mit einem oder mehreren Prozessoren und einem oder mehreren Speichergeräten, die an verschiedenen Orten verteilt sind, z. B. an einem lokalen Client und/oder einer oder mehreren entfernten Serverfarmen und/oder Datenzentren). Das Computersystem kann jede beliebige Schaltung oder Kombination von Schaltungen umfassen. In einer Ausführungsform kann das Computersystem einen oder mehrere Prozessoren umfassen, die von beliebigem Typ sein können. Der hier verwendete Begriff "Prozessor" kann jede Art von Rechenschaltung bezeichnen, z. B. einen Mikroprozessor, einen Mikrocontroller, einen CISC-Mikroprozessor (Complex Instruction Set Computing), einen RISC-Mikroprozessor (Reduced Instruction Set Computing), einen VLIW-Mikroprozessor (Very Long Instruction Word), einen Grafikprozessor, einen digitalen Signalprozessor (DSP), einen Mehrkernprozessor, ein FPGA (Field Programmable Gate Array) oder jede andere Art von Prozessor oder Verarbeitungsschaltung. Andere Arten von Schaltkreisen, die im Computersystem enthalten sein können, können ein kundenspezifischer Schaltkreis, ein anwendungsspezifischer integrierter Schaltkreis (ASIC) oder ähnliches sein, wie z. B. ein oder mehrere Schaltkreise (z. B. ein Kommunikationsschaltkreis) zur Verwendung in drahtlosen Geräten wie Mobiltelefonen, Tablet-Computern, Laptop-Computern, Zwei-Wege-Funkgeräten und ähnlichen elektronischen Systemen. Das Computersystem kann eine oder mehrere Speichervorrichtungen enthalten, die ein oder mehrere für die jeweilige Anwendung geeignete Speicherelemente umfassen können, wie z. B. einen Hauptspeicher in Form eines Direktzugriffsspeichers (RAM), eine oder mehrere Festplatten und/oder ein oder mehrere Laufwerke, die mit Wechselmedien wie Compact Discs (CD), Flash-Speicherkarten, digitalen Videodisks (DVD) und dergleichen umgehen. Das Computersystem kann auch ein Anzeigegerät, einen oder mehrere Lautsprecher und eine Tastatur und/oder ein Steuergerät enthalten, das eine Maus, einen Trackball, einen Touchscreen, ein Spracherkennungsgerät oder jedes andere Gerät umfassen kann, das es einem Systembenutzer ermöglicht, Informationen in das Computersystem einzugeben und Informationen von ihm zu empfangen.

Einige oder alle Verfahrensschritte können von einem Hardware-Gerät (oder unter Verwendung eines solchen) ausgeführt werden, wie z. B. einem Prozessor, einem Mikroprozessor, einem programmierbaren Computer oder einer elektronischen Schaltung. In einigen Ausführungsformen können einige oder mehrere der wichtigsten Verfahrensschritte von einem solchen Gerät ausgeführt werden.

Abhängig von bestimmten Implementierungsanforderungen können Ausführungsformen der vorliegenden Offenbarung in Hardware oder in Software implementiert werden. Die Implementierung kann unter Verwendung eines nicht-übertragbaren Speichermediums wie eines digitalen Speichermediums, beispielsweise einer Diskette, einer DVD, einer Blu-Ray, einer CD, eines ROM, eines PROM, eines EPROM, eines EEPROM oder eines FLASH-Speichers erfolgen, auf dem elektronisch lesbare Steuersignale gespeichert sind, die mit einem programmierbaren Computersystem zusammenarbeiten (oder zusammenarbeiten können), so dass das jeweilige Verfahren durchgeführt wird. Daher kann das digitale Speichermedium computerlesbar sein.

Einige Ausführungsformen gemäß der vorliegenden Offenbarung umfassen einen Datenträger mit elektronisch lesbaren Steuersignalen, die mit einem programmierbaren Computersystem zusammenarbeiten können, so dass eines der hier beschriebenen Verfahren durchgeführt wird. Im Allgemeinen können Ausführungsformen der vorliegenden Offenbarung als Computerprogrammprodukt mit einem Programmcode implementiert werden, wobei der Programmcode zur Ausführung eines der Verfahren dient, wenn das Computerprogrammprodukt auf einem Computer läuft. Der Programmcode kann zum Beispiel auf einem maschinenlesbaren Träger gespeichert sein.

Andere Ausführungsformen umfassen das Computerprogramm zur Durchführung eines der hierin beschriebenen Verfahren, das auf einem maschinenlesbaren Träger gespeichert ist.

Mit anderen Worten, eine Ausführungsform der vorliegenden Offenbarung ist daher ein Computerprogramm mit einem Programmcode zur Durchführung eines der hierin beschriebenen Verfahren, wenn das Computerprogramm auf einem Computer läuft.

Eine weitere Ausführungsform der vorliegenden Offenbarung ist daher ein Speichermedium (oder ein Datenträger oder ein computerlesbares Medium), auf dem das Computerprogramm zur Durchführung eines der hier beschriebenen Verfahren gespeichert ist, wenn es von einem Prozessor ausgeführt wird. Der Datenträger, das digitale Speichermedium oder das aufgezeichnete Medium sind typischerweise greifbar und/oder nicht-übertragbar. Eine weitere Ausführungsform der vorliegenden Offenbarung ist ein Gerät wie hierin beschrieben, das einen Prozessor und das Speichermedium umfasst.

Eine weitere Ausführungsform der vorliegenden Offenbarung ist daher ein Datenstrom oder eine Folge von Signalen, die das Computerprogramm zur Durchführung eines der hier beschriebenen Verfahren darstellen. Der Datenstrom oder die Signalfolge kann beispielsweise so konfiguriert sein, dass er/sie über eine Datenkommunikationsverbindung, z.B. über das Internet, übertragen wird.

Eine weitere Ausführungsform umfasst ein Verarbeitungsmittel, z. B. einen Computer oder ein programmierbares Logikgerät, das so konfiguriert oder angepasst ist, dass es eines der hierin beschriebenen Verfahren durchführen kann.

Eine weitere Ausführungsform umfasst einen Computer, auf dem das Computerprogramm zur Durchführung eines der hierin beschriebenen Verfahren installiert ist.

Eine weitere Ausführungsform gemäß der vorliegenden Offenbarung umfasst eine Vorrichtung oder ein System, die bzw. das so konfiguriert ist, dass sie bzw. es ein Computerprogramm zur Durchführung eines der hierin beschriebenen Verfahren an einen Empfänger überträgt (z. B. auf elektronischem oder optischem Wege). Bei dem Empfänger kann es sich beispielsweise um einen Computer, ein mobiles Gerät, ein Speichergerät oder dergleichen handeln. Die Vorrichtung oder das System kann zum Beispiel einen Dateiserver zur Übertragung des Computerprogramms an den Empfänger umfassen.

In einigen Ausführungsformen kann eine programmierbare Logikvorrichtung (z. B. ein feldprogrammierbares Gate-Array) verwendet werden, um einige oder alle Funktionen der hier beschriebenen Verfahren auszuführen. In einigen Ausführungsformen kann ein feldprogrammierbares Gate-Array mit einem Mikroprozessor zusammenarbeiten, um eines der hier beschriebenen Verfahren durchzuführen. Im Allgemeinen werden die Verfahren vorzugsweise von einem beliebigen Hardware-Gerät durchgeführt.

## Patentansprüche

1. Ein computer-implementiertes Verfahren (100) zur Taktzeit- und/oder Verfügbarkeitsanalyse eines rezeptgesteuerten Prozesses in einer chemischen Produktionsanlage, wobei das Verfahren zumindest umfasst:
Bereitstellen (102) einer Prozessdefinition, welche eine Anzahl von Apparaten (802) der Produktionsanlage und bei mehr als einem Apparat (802) deren Abfolge in dem Prozess definiert;
Empfangen (104) von Produktionsdaten der Produktionsanlage, welche Informationen über ausgeführte Rezeptschritte für eine Mehrzahl von Partien, welche die Anzahl von Apparaten (802) durchlaufen, umfassen;
automatisches Bestimmen (106) zumindest einer Taktzeit und/oder einer Wartezeit und/oder einer Batchzeit (602) basierend auf den Informationen über ausgeführte Rezeptschritte für eine Mehrzahl von Partien, welche die Anzahl von Apparaten (802) durchlaufen;
automatisches Auswerten (108) zumindest der Batchzeit (602) und/oder der Wartezeit und/oder der Taktzeit zumindest eines der Apparate (802) zum Identifizieren zumindest eines Apparats (802) aus der Anzahl von Apparaten (802) als Engstellenapparat, welcher eine Taktzeit und/oder Verfügbarkeit des Prozesses beeinflusst; und
Anzeigen (110) von Analyseinformationen (300), welche zumindest den identifizierten zumindest einen Engstellenapparat umfassen, auf einer elektronischen Anzeigevorrichtung zur Verwendung bei einer Optimierung des Prozesses und/oder der Produktionsanlage durch einen Anwender.

2. Verfahren nach Anspruch 1, wobei das Verfahren ferner umfasst:
automatisches Bestimmen zumindest einer Rezeptschrittdauer (604) basierend auf den Informationen über die ausgeführten Rezeptschritte für die Mehrzahl von Partien, welche die Anzahl von Apparaten durchlaufen; wobei das automatische Bestimmen zumindest der Taktzeit, der Wartezeit und der Batchzeit auf der Rezeptschrittdauer basiert.

3. Verfahren nach irgendeinem der Ansprüche 1-2, wobei die Analyseinformationen (300) ferner umfassen:
Informationen (302) über Randbedingungen der Produktionsanlage; und/oder
Informationen (304) über den identifizierten zumindest einen Engstellenapparat; und/oder
Informationen über einen Satz von weiteren Engstellenapparaten; und/oder
Informationen über die ausgeführten Rezeptschritte; und/oder
Informationen über eine Vollständigkeit der verwendeten Zeitinformationen.

4. Verfahren nach Anspruch 3, wobei die Informationen (302) über Randbedingungen der Produktionsanlage umfassen:
einen konfigurierbaren Zeitraum, über welchen die Produktionsdaten gemessen wurden; und/oder
Informationen über die Anzahl von Apparaten.

5. Verfahren nach irgendeinem der Ansprüche 3-4, wobei die Informationen (304) über den zumindest einen identifizierten Engstellenapparat umfassen:
Rezeptschrittdauerinformationen des Engstellenapparats, insbesondere eine mittlere Rezeptschrittdauer und/oder eine Schwankung der Rezeptschrittdauer und/oder einen zeitlichen Verlauf der Rezeptschrittdauer; und/oder
Batchzeitinformationen des Engstellenapparats, insbesondere eine mittlere Batchzeit und/oder eine Batchzeitschwankung und/oder einen zeitlichen Verlauf der Batchzeit; und/oder
Taktzeitinformationen des Engstellenapparats, insbesondere eine mittlere Taktzeit und/oder einer Taktzeitschwankung und/oder einen zeitlichen Verlauf der Taktzeit; und/oder
Wartezeitinformationen des Engstellenapparats, insbesondere eine mittlere Wartezeit und/oder einer Wartezeitschwankung und/oder einen zeitlichen Verlauf der Wartezeit und/oder eine Häufigkeit des Wartens und/oder eine Relevanz des Wartens für die Taktzeit des Prozesses; und/oder
Informationen über eine Verfügbarkeit des Engstellenapparats; und/oder
einen Zielwert (402) für die Taktzeit des Prozesses.

6. Verfahren nach irgendeinem der Ansprüche 3-5, wobei die Informationen über den Satz von weiteren Engstellenapparaten umfassen:
eine konfigurierbare Anzahl der Apparate für den Satz von weiteren Engstellenapparaten; und/oder
Rezeptschrittdauerinformationen des Satzes von weiteren Engstellenapparaten, insbesondere eine mittlere Rezeptschrittdauer und/oder eine Schwankung der Rezeptschrittdauer und/oder einen zeitlichen Verlauf der Rezeptschrittdauer; und/oder
Batchzeitinformationen des Satzes von weiteren Engstellenapparaten, insbesondere eine mittlere Batchzeit und/oder eine Batchzeitschwankung und/oder einen zeitlichen Verlauf der Batchzeit; und/oder
Informationen über eine Verfügbarkeit des Satzes von weiteren Engstellenapparaten; und/oder
eine Priorisierungsangabe des Satzes von weiteren Engstellenapparaten hinsichtlich ihrer Relevanz auf die Taktzeit des Prozesses.

7. Verfahren nach irgendeinem der Ansprüche 3-6, wobei die Informationen über die ausgeführten Rezeptschritte umfassen:
Namen der ausgeführten Rezeptschritte; und
eine Rezeptschrittdauer (604) der jeweiligen Rezeptschritte.

8. Verfahren nach irgendeinem der Ansprüche 1-7, wobei das Anzeigen der Analyseinformationen (300) auf einer grafischen (306, 308) und/oder statistischen Darstellung (304) basiert.

9. Verfahren nach Anspruch 8, wobei die grafische Darstellung umfasst:
ein Boxplotdiagramm (400, 500) und/oder ein Zeitreihendiagramm (600) und/oder ein Korrelationsdiagramm und/oder ein Wahrscheinlichkeitsnetzdiagramm (700) und/oder eine Tabelle (900) mit Balken, welche die Rezeptschrittdauern anzeigen; und/oder
wobei die statistische Darstellung umfasst:
eine Häufigkeitsangabe eines Rezeptschritts und/oder einer Taktzeit und/oder einer Wartezeit und/oder einer Batchzeit; und/oder
einen Minimalwert einer Rezeptschrittdauer und/oder einer Taktzeit und/oder einer Wartezeit und/oder einer Batchzeit; und/oder
einen Maximalwert einer Rezeptschrittdauer und/oder einer Taktzeit und/oder einer Wartezeit und/oder einer Batchzeit; und/oder
eine Angabe über ein oder mehrere Quartile, insbesondere über ein erstes und/oder drittes Quartil, einer Rezeptschrittdauer und/oder einer Taktzeit und/oder einer Wartezeit und/oder einer Batchzeit; und/oder
einen arithmetischen Mittelwert einer Rezeptschrittdauer und/oder einer Taktzeit und/oder einer Wartezeit und/oder einer Batchzeit; und/oder
einen Median einer Rezeptschrittdauer und/oder einer Taktzeit und/oder einer Wartezeit und/oder einer Batchzeit; und/oder
einen Stabilitätsfaktor eines Rezeptschritts und/oder einer Taktzeit und/oder einer Wartezeit und/oder einer Batchzeit.

10. Verfahren nach irgendeinem der Ansprüche 1-9 ferner umfassend:
Empfangen einer Nutzereingabe, welche eine gewünschte Art der Darstellung der Analyseinformationen (300) anzeigt; und
Bereitstellen der Analyseinformationen (300) basierend auf der durch die Nutzereingabe angezeigten gewünschten Art der Darstellung.

11. Verfahren nach Anspruch 10, wobei die Nutzereingabe umfasst:
eine Dauer eines konfigurierbaren Zeitraums, für den die Produktionsdaten zum automatischen Auswerten verwendet werden sollen; und/oder eine Auswahl von Apparaten (802) der Anzahl von Apparaten, welche zum automatischen Auswerten verwendet werden sollen; und/oder
eine Auswahl von statistischen Deskriptoren, welche zum automatischen Auswerten verwendet werden sollen; und/oder
eine Angabe eines Zielwerts (402) für die Taktzeit des Prozesses.

12. Verfahren nach irgendeinem der Ansprüche 1-11, ferner umfassend:
Durchführen einer Messsystemanalyse, MSA, (1000, 808) zum Bestimmen einer Vollständigkeit der verwendeten Zeitinformationen; und/oder
Verfahren nach irgendeinem der Ansprüche 1-11 ferner umfassend:
Bestimmen, dass weitere Produktionsdaten zur Verfügung stehen;
erneutes Durchführen des automatischen Bestimmens (106) und/oder Auswertens (108) basierend auf den weiteren Produktionsdaten; und
Aktualisieren der angezeigten Analyseinformationen (300).

13. Verfahren nach irgendeinem der Ansprüche 1-12, ferner umfassend:
Bereitstellen einer Empfehlung für eine Maßnahme zur Optimierung des Prozesses und/oder der Produktionsanlage basierend auf den Analyseinformationen (300); und/oder
Bereitstellen einer Analyse für eine umgesetzte Maßnahme zur Optimierung des Prozesses und/oder der Produktionsanlage basierend auf den Analyseinformationen (300); und/oder
Empfangen einer Befehlseingabe durch den Anwender umfassend eine Maßnahme zur Optimierung des Prozesses und/oder der Produktionsanlage.

14. Eine Datenverarbeitungsvorrichtung (200), welche Mittel (202, 204) zur Ausführung des Verfahrens (100) nach irgendeinem der vorhergehenden Ansprüche 1-13 umfasst.

15. Ein Computerprogramm (206) oder ein computerlesbares Medium, auf dem ein Computerprogramm (206) gespeichert ist, wobei das Computerprogramm (206) Befehle umfasst, die bei der Ausführung des Computerprogramms (206) durch eine Datenverarbeitungsvorrichtung (200) diese veranlassen, das Verfahren (100) nach irgendeinem der vorhergehenden Ansprüche 1-13 auszuführen.
